# EUROPEAN PATENT APPLICATION

(11) **EP 2 084 960 A1**
(43) Date of publication of application: **05.08.2009**
(21) Application number: 07858281.4
(22) Date of filing: 27.11.2007
(51) Int. Cl.: A01K 1/03

(54) **EQUIPMENT FOR ASEPTIC HANDLING OF LABORATORY ANIMALS**

(30) Priority: 30.11.2006 ES 200603074
(71) Applicant: Consejo Superior De Investigaciones Científicases, 28006 Madrid (ES)
(72) Inventor: PALACÍN URQUIJO, Fernando Javier, 28049 Cantoblanco (ES)
(74) Representative: Pons Arino, Angel
(86) International application number: PCT/ES2007/070197
(87) International publication number: WO 2008/065231

(57) **Abstract**

The equipment consists of at least one pneumatic holding device (1) in the form of a gun, the body (2) of which is connected via a pipe (4) to a vacuum source. Removably coupled 5 to the body is a head (6) carrying an inner filter (8) and ending in a front, suction port (9) to which there is removably coupled a capsule (10) -single-use or reusable after sterilization - such that said gun exerts a suction-cup effect on the animal in order to secure same, whilst release is achieved by uncovering a port (12) in the body, which, while the animal is secured, is kept closed with the finger. Via a trigger (20) an ejection device (19) allows the capsule(10) to be removed after use such that, during handling, only the capsule (10) comes into contact with the animal, said capsule (10) in turn being removed without manual contact therewith, thereby fully safeguarding conditions of asepsis during handling.

## Description

### OBJECT OF THE INVENTION

The present invention relates to equipment specially intended for handling laboratory animals, such as for example mice, equipment having the fundamental purpose of ensuring that said handling is carried out in a totally aseptic manner, i.e. without risk of contamination between said animals produced by microorganisms and due to contact during said handling with the animals themselves, or the cages, bedding, feed, drinking water, etc.

It is also an object of the invention that greater speed in the animal gripping and releasing manoeuvre is achieved, with the consequent and beneficial effect on costs, on reducing the need for labour, in addition to the requirement of specialisation thereof.

The invention therefore falls within the field of equipment and devices for handling animals at experimental laboratory level.

### BACKGROUND OF THE INVENTION

Within the practical field of application of the invention, that of experiments on animals and handling thereof in animal houses, large quantities of these must be moved on a daily basis, not only for experimental reasons but also for their maintenance and production.

Within this field, the greatest challenge is to avoid contamination caused by microorganisms.

In most modern facilities, to avoid this risk the animals are housed in sterile areas or white rooms, equipped with a series of very different barriers. There are barriers that use air as a constituent means thereof, specifically generating overpressure in the area where the animals are located and filtering the air with high-efficiency filters, there being a very high number of air renewals carried out in those areas where the animals are located.

The so-called "ventilated" cages occupied by the animals are fully isolated from the exterior, each cage being connected to sterile air ducts, both for supplying and extracting air. Likewise, everything that is in contact with the animals, including cages, bedding, feed, drinking water, etc. is previously sterilised by autoclave at 121°C.

For their part, the operators wear special clothing that is also sterile to handle the animals, such as coveralls, caps, face masks, gloves, etc. Handling of the animal by the operator is carried out by moving the cage to a cubicle with a sterile atmosphere, wherein the cage is opened either for transferring the animal or for the experimental handling thereof.

The moment in which most contamination occurs is precisely during handling thereof, as it is done manually or occasionally with tongs and, if any animal were contaminated, the effect of said contamination would be transmitted to the rest of the animals located in those cages, which are handled by the same operator or with the same tongs, through said operator's hand or tongs used for such purpose.

The consequences of said contamination can be very serious, as it can not only adulterate the results of certain experimental processes, but also in the case of those which can extend considerably over time due to requiring the participation of several generations of animals, contamination in the final phase of the research process could entail the need to fully repeat the work, which can involve several years of additional work.

### DESCRIPTION OF THE INVENTION

The equipment for the aseptic handling proposed by the experiment resolves the previously expounded problems in a fully satisfactory manner, practically eliminating the risk of contamination.

For this purpose and more specifically, the preconised equipment is based on the use of a pneumatic holding device, preferably in the form of a gun which, through a sucking or suction effect allows the animal to be secured thereto in the manner of a suction-cup, and released by simply interrupting the suction effect.

In order to achieve the desired conditions of asepsis, a capsule is removably coupled to the suction mouth of the pneumatic holding device, which may be single-use or reusable, but is in any case removed from the pneumatic holding device, hereinafter referred to as gun, without manual contact therewith, for which purpose it is equipped with an ejection device which, by means of a trigger, allows detachment of the capsule, either for removal or sterilisation thereof, which in any case is replaced by another, duly sterilised capsule, in the following operating cycle of the gun.

The capsule may be fixed using the suction of the gun itself or through the participation of a ferrous material in said capsule and disposing a permanent magnet on the gun mouth.

In the case of single-use capsules, a capsule supply device of adequate capacity will be provided, while in the case of reusable capsules these will be introduced, after use thereof, in an appropriate steriliser, such as for example an electric Bunsen-type steriliser for the subsequent and new use thereof.

The gun will be connected to a source of negative pressure or depression, as mentioned earlier, and will preferably have a port or window operatively disposed in an easily and directly accessible manner by the thumb of the hand of the operator who is holding the gun, in such a manner that said port may be obturated with said finger, resulting in the operability of the gun as a means of securing the animal while it may be released by simply separating the finger from the port so that, as air penetrates therethrough, the negative pressure is lost and becomes insufficient to continue retaining the animal, which will fall within the deposition zone envisaged for such purpose.

Evidently, the aforementioned systems for securing the capsules are not limiting in any way whatsoever, allowing the use of any other adequate system.

In accordance with another characteristic of the invention, the participation of a removable body and head in the gun has been envisaged, establishing between these a filter for retaining the particles, preventing these from accessing the body through the head and from here to the depression system, to which a plurality of guns may be connected in parallel, logically carrying out the periodic sterilisation of said head and filter.

As deduced from the foregoing, with the equipment proposed by the invention the only elements that come into contact with the animals are the aforementioned disposable or reusable capsules and, given that each capsule is replaced after use thereof, the risk of contamination due to handling thereof is practically null.

### DESCRIPTION OF THE DRAWINGS

For the purpose of complementing this description and helping to better understand the characteristics of the invention, a set of drawings in accordance with a preferred example of practical embodiment thereof has been included as an integral part of this specification, wherein the following have been represented in an illustrative and non-limiting manner:
Figure 1 shows, according to a perspective schematic representation, a gun or pneumatic holding device which participates in the equipment for the aseptic handling of laboratory animals that constitutes the object of the present invention.
Figure 2 shows, also according to a perspective view, a detail of the coupling of one of the capsules when these are disposable.
Figure 3 shows the manoeuvre for removal of the capsule after the single use thereof.
Figure 4 shows a detail of the capture or deposition of a capsule, with the complementary steriliser, in the case of reusable capsules.
Figure 5 shows an example of practical use of the aforementioned gun during the manoeuvre for extraction of a mouse from the corresponding tray.
Figure 6 shows a representation similar to that of the preceding figure, the manoeuvre for releasing or depositing said mouse on another tray.
Figure 7 shows, finally and according to a schematic representation, a group of guns or pneumatic holding devices connected in parallel to a common source of depression.

### PREFERRED EMBODIMENT OF THE INVENTION

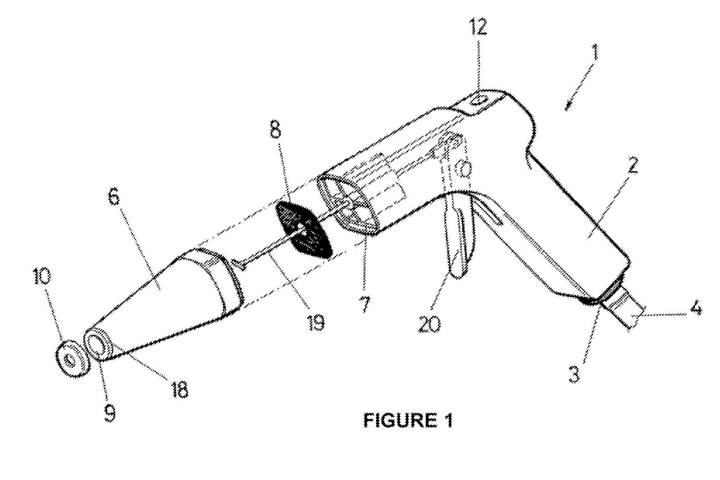

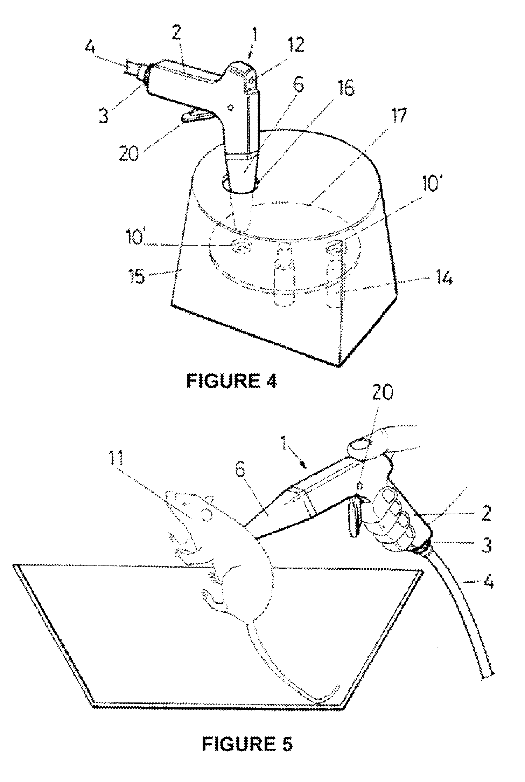

In light of the foregoing figures and especially Figure 1, it can be observed how the preconised equipment includes a gun (1), the butt or handle (2) of which ends in a joint nut (3) for connection to a pipe (4) through which said gun (2) is related to a source of depression (5), said body (2) being complemented by a head (6) that can be frontally coupled to and removed from the mouth (7) of the body (2), head on which a filter (8) is in turn mounted, the head (6) being hollow, like the body (2), its front and free extremity ending in a port (9) to which a capsule (10) is removably coupled, in such a manner that when the depressor (5) is in operation an absorption or suction effect is produced through the capsule (10), thereby securing the mouse (11) or animal in question, as shown in Figure 5 and by means of a suction-cup effect.

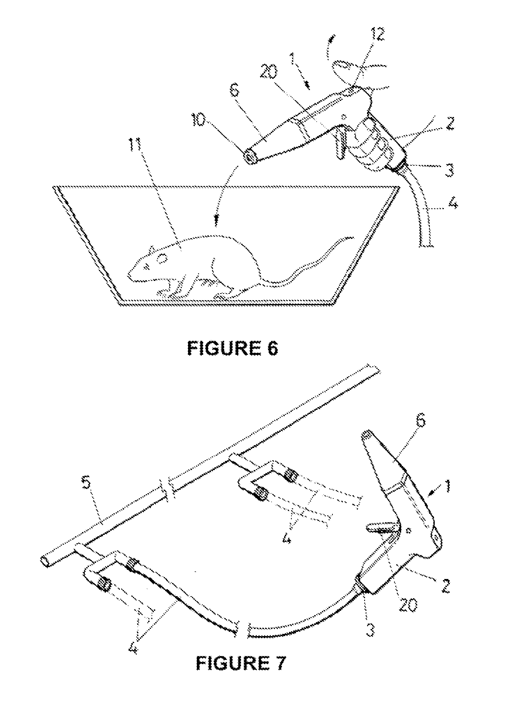

The depressor (5) does not need to stop working in order to release the mouse, as the body (2) of the gun incorporates a port (12) for such purpose, disposed in opposition to the thumb of the hand of the user, in working position, in such a manner that when said port (12) is uncovered air enters the body (2) therethrough and the aforementioned suction effect is lost through the capsule (10), thereby releasing the animal, as shown in Figure 6.

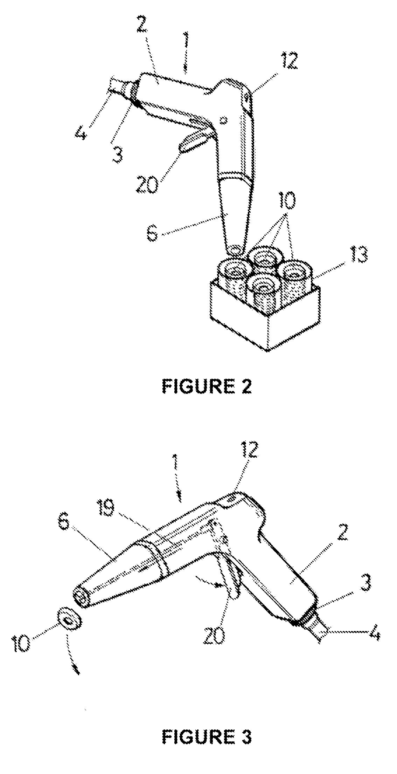

As mentioned earlier, the capsule (10) may be of a single-use disposable nature, in which case a storage deposit (13) participates in the equipment, such as that shown in Figure 2, where a plurality of capsules are disposed in piles and may be individually extracted with the gun (1) itself and, as we will see later on, although an electric Bunsen-type steriliser (14), such as that shown in Figure 4, may additionally or alternatively participate in the equipment, conveniently housed within a casing (15) equipped with an access window (16) for the gun (1), in such a manner that through said window (16) the gun partially penetrates the casing (15), accessing the reusable capsule (10') and depositing said capsule on a rotating plate (17) which, turning 180°, places it on the steriliser (14), while the already sterilised capsule (10') is disposed in opposition to the gun (1) for being captured thereby.

As we can deduce from observing Figures 2 and 4, each capsule (10-10') is directly captured by the gun, without requiring manual contact with said capsules.

For the also aseptic removal thereof, said capsules (10-10') have been envisaged to be fixed to the head (6) of the gun (1) or by means of the same absorption effect thereof or by means of the ferrous nature of said capsules that will allow the fixation thereof with the collaboration of a magnet (18), in such a manner that release of the capsule is achieved in the first case by interrupting the suction effect and, in the second case, with the collaboration of an ejection device (19) housed within the head (6), which is actuated by a trigger (20) and which in its axial displacement pushes the capsule (10-10'), separating it from the port (9) of the head, as shown in Figure 3. Nevertheless and as mentioned earlier, any other means may be used for securing and releasing the capsule (10-10'), provided that manual contact with said capsule is not required.

It only remains to be said that, given the extraordinary number of animals handled daily in this type of facilities (animal houses), a plurality of guns (1), assisted by respective ducts or pipes (4) have been envisaged to be connected in parallel to a single depressor (5), for example using a distribution network that is embedded in or fixed to the walls, ended in automatic shut-off keys, which can be used both simultaneously and selectively.

## Claims

1. Equipment for aseptic handling of laboratory animals which, having the purpose of avoiding that said handling is carried out without manual contact with the animal or with elements that will subsequently come into contact with other animals without previously having been sterilised, is **characterised in that** a pneumatic holding device (1) which through a front capsule (10-10') has a suction-cup effect on the animal for securing the same participates therein, with the special peculiarity that said capsule is removably associated to the pneumatic holding device, in such a manner that it is removed from the pneumatic holding device after handling each group of animals in a same tray or each animal, wherein a capsule (10-10') supply device (13-15) collaborates with said pneumatic holder (1).

2. Equipment for aseptic handling of laboratory animals, according to claim 1, **characterised in that** the pneumatic holding device (1) is materialised in a type of gun with a body (2), having a joint nut (3) for coupling to the corresponding pipe (4) that connects said gun to a depressor, said body (2) receiving a head (6) wherein said capsule (10-10') is removably disposed, having envisaged that said body (2) will incorporate a port (12) operatively disposed in opposition to the thumb of the operator when the gun is in working position, in such a manner that said port (12), closed during the animal securing manoeuvre, establishes atmospheric communication with the interior of the gun on separating the thumb of the hand, with consequent elimination of the necessary depression through the capsule (10-10') and, in turn, consequent release of the animal.

3. Equipment for aseptic handling of laboratory animals, according to the preceding claims, **characterised in that** the capsule (10) is of single use, supplied by a storage deposit (13) and is disposable after the single use thereof.

4. Equipment for aseptic handling of laboratory animals, according to claims 1 and 2, **characterised in that** the capsule (10-10') is reusable, in which case a steriliser (14) acting underneath a rotating plate (17), wherein each used capsule (10') is deposited and where the sterilisation thereof takes place, participates in the equipment, said steriliser being housed within a casing (15) having a window (16) that is dimensionally adequate to allow the introduction of the head (6) of the gun (1), in order to deposit the capsule (10') and receive it again after sterilisation thereof.

5. Equipment for aseptic handling of laboratory animals, according to the preceding claims, **characterised in that** the capsule (10-10') is fixed to the mouth of the head (6) by the same absorption effect thereof.

6. Equipment for aseptic handling of laboratory animals, according to claims 1 to 4, **characterised in that** the capsule (10-10') is made of ferrous material and is fixed to the mouth of the head of the gun (1) with the collaboration of a magnet (18) established in said mouth (9).

7. Equipment for aseptic handling of laboratory animals, according to the preceding claims, **characterised in that** an ejection device (19) is established in the gun, which is axially movable within the head (6) and acts as a pushing element for removal of the capsule (10-10'), being actuated by means of a tilt-mounted trigger (20) on the body (2) of the gun.

8. Equipment for aseptic handling of laboratory animals, according to the preceding claims, **characterised in that** a filter (8) is removably established within the head.

9. Equipment for aseptic handling of laboratory animals, according to the preceding claims, **characterised in that** a plurality of guns (1), through respective ducts (4), are connected in parallel to a common depressor (5) that feeds each and every one of these.
